# EUROPEAN PATENT SPECIFICATION

(11) **EP 1 592 269 B1**
(45) Date of publication and mention of the grant of the patent: **02.09.2015**
(21) Application number: 04702629.9
(22) Date of filing: 16.01.2004
(51) Int. Cl.: H04W 52/06, H04W 52/24, H04W 52/20, H04W 52/50

(54) **POWER CONTROLLING METHOD BASED ON DWPTS**
LEISTUNGSREGELUNGSVERFAHREN AUF DWPTS-BASIS
PROCEDE DE COMMANDE DE PUISSANCE FONDE SUR DWPTS

(30) Priority: 16.01.2003 CN 03114938
(43) Date of publication of application: 02.11.2005
(73) Proprietor: China Academy of Telecommunications Technology, Haidian District, Beijing 100191 (CN)
(72) Inventor: LI, Shihe, No.40 Xue Yuan Rd., Beijing 100083 (CN); YANG, Guiliang, No.40 Xue Yuan Rd., Beijing 100083 (CN)
(74) Representative: Mounteney, Simon James
(86) International application number: PCT/CN2004/000061
(87) International publication number: WO 2004/064425

(56) References cited:
- EP-A1- 1 077 531
- EP-A2- 0 682 419
- WO-A1-00/59130
- CN-A- 1 196 847
- CN-A- 1 302 479
- GB-A- 2 314 486
- JP-A- 2000 013 310

## Description

### Field of the Technology

The present invention belongs to mobile communication field and relates to a power control method in a mobile communication system, more particularly, to a power control method based on Downlink Piloting Time Slot (DwPTS) in a mobile communication system.

### Background of the Invention

Power control is a traditional and important technology in a CDMA mobile communication system. In the third generation mobile communication system, the "open-loop control + closed-loop control + outer-loop control" mode is adopted. The open-loop power control method is described in the published TS 25.331 of 3GPP Specification (Version 2002.3, Release 99 and Release 4), while the closed-loop power control is described in TS 25.214 and TS 25.224. Besides, support to the mechanism of outer-loop power control is provided in TS 25.331 and TS 25.433.

Taking the Low Chip Rate Time Division Duplex (LCR TDD) standard in 3GPP as example, the basic approaches of the three power control methods are as follows.

For open-loop power control, a base station broadcasts transmission power of a downlink public channel (P-CCPCH), meanwhile broadcasts the expected transmission power of an uplink public channel (SYNC_UL); a terminal, before sending SYNC_UL, measures actual receiving power of the downlink public channel (P-CCPCH) and reads transmission power of this channel in the broadcast information, the difference between the two powers being the path transmission loss of a signal. According to the path transmission loss and the expected transmission power of the uplink public channel in the broadcast information, the terminal can determine its own transmission power of uplink SYNC_UL. In the open-loop power control method, it is assumed that uplink path transmission loss and downlink path transmission loss are equal. In a Frequency Division Duplex (FDD) system (such as UTRA FDD in 3GPP Specification), since different carrier frequencies are adopted in uplink and downlink transmissions and the transmission conditions of electric waves are different, this assumption is inaccurate. Moreover, in a multi-code-channel working condition, multiple access interference inside the local cell is severe and it is difficult to accurately measure the signal power level received by the terminal, resulting in large error in the calculation of open-loop power control. On the other hand, in a Time Division Duplex (TDD) system (such as UTRA TDD in 3GPP Specification), since the same carrier frequency is adopted in uplink and downlink and the transmission condition for electric wave is the same, the above-noted assumption is relatively accurate. Therefore, in terms of calculation accuracy of open-loop power control, a TDD system is better than an FDD system.

However, in a TDD system there is severe interference among P-CCPCH channels of adjacent cells and there is severe error in the P-CCPCH signal power level sent by a base station as measured by a terminal. In this case, accuracy of open-loop power control is limited. As a result, in the low chip rate TDD standard, application of open-loop power control is limited to the random access phase and not recommended in the communication maintenance phase.

In a CDMA system, a terminal usually adopts closed-loop power control during communications. In closed-loop power control, power control is implemented by the base station which measures and judges the received Signal to Interference Noise Ratio (SIR). If SIR is higher than the required threshold, the terminal is required to reduce the signal power level through a control command; in contrast, if SIR is lower than the required threshold, the terminal is required to increase the signal power level through a control command. With this method, not only a base station can obtain the required service quality, but also the system capacity is guaranteed. The main problem of closed-loop power control, however, is the so called "cocktail party effect". A base station will request a terminal to increase transmission power because of interference in the system or other reasons. However, due to the self-interference characteristic of a CDMA system, increase of the transmission power of a terminal will lead to increase of interference to other terminals, which, in turn, will make the system request other terminals to increase transmission power, resulting in larger interference to the current terminal. If this continues in cycles, transmission power of a terminal is becoming larger and larger and so is the interference thereto while the system capacity becomes smaller and smaller. Finally the cell will be congested. To avoid the "cocktail party effect", an outer-loop power control procedure is needed to restrain closed-loop power control.

The outer-loop power control procedure is controlled by high hierarchy signaling. The procedure comprises primarily setting power control thresholds (i.e. target values of SIR) in connection with each terminal by the system for a base station according to the network configuration, system capacity and required quality of the provided service, and actual quality of the current service (e.g. Error Rate (FER)), so as to achieve the best possible matching between system performance and capacity. As the existing FDD systems are all severe interference-limited systems, a large number of research papers concerning outer-loop power control are published in recent years in order to keep the capacity as much as possible, leading to more and more complicated algorithms and increasing load for a Radio Network Controller (RNC).

To sum up, since it is not possible to get a high accuracy of power measurement and there are other factors like multi-path broadcast and fast fading, power control has always been a critical issue in a CDMA system. Although open-loop power control is simple, there may be large errors if P-CCPCH is measured for getting the transmission loss, which limits the application of open-loop power control during the period while the communications are maintained. On the other hand, because of the "cocktail party effect", closed-loop power control must depend on outer-loop power control procedure. In the current CDMA communication standard (referring to the third generation mobile communication standards in 3GPP and 3GPP2), outer-loop power control is fully incorporated and accomplished within a base station controller. A base station controller would control dozens, even hundreds, of base stations and there would be thousands of terminals communicating simultaneously within the controlling scope of this base station controller. As all the power controls have to be done by this base station controller, the load is too heavy and devices are too complicated.

EP 0682419A2 discloses a transmission power control method of a mobile station in a CDMA system, in which the mobile station measures an average value of the received power per transmission power control period of a desired signal from the base station, and detects a difference between the current average value and that of one of the previous transmission power control periods.

EP 1077531A1 discloses an apparatus and method for transmission/reception carrying out transmit power control (TPC), in which a compensation value is calculated based on a difference between the transmit power value output from closed-loop TPC section and that of open-loop TPC section. Then, an open-loop transmit power control is performed using a value obtained by adding the compensation value to the reception-level-based transmit power value.

### Summary of the Invention

An object of the present invention is to provide a power control method based on DwPTS to overcome the shortcoming in the prior art.

The object of the present invention is achieved through the following technical scheme: a power control method based on DwPTS, comprising an open-loop power control procedure while a terminal is getting accessed randomly and a closed-loop power control procedure while communications are being maintained after the terminal is accessed, wherein
the said open-loop power control procedure while a terminal is getting accessed randomly further comprises:
A. the terminal measuring the received DwPTS signal powers transmitted by adjacent base stations during cell searching, sorting the base stations in the order of signal strength of DwPTS, and determining candidate base stations;
B. the terminal calculating the Uplink Piloting Time Slot (UpPTS) transmission power for open-loop power control while the terminal is getting accessed according to the base station transmission power broadcasted by the most suitable candidate base station, the expected receiving power and the DwPTS signal power of the base station actually measured by the terminal, and sending an access request to the most suitable candidate base station with this transmission power;
   the said closed-loop power control procedure after the terminal is accessed further comprises:
C. the base station determining the required receiving power, determining actual uplink transmission power required by the base station for closed-loop power control, sending the required receiving power to the terminal, and sending the actual uplink transmission power required by the base station to the terminal with a closed-loop power control command;
D. the terminal keeping measuring the actually received DwPTS signal power of the base station, then calculating an uplink transmission power reference value for open-loop power control according to the base station transmission power and the required receiving power; and
E. comparing the calculated uplink transmission power reference value for open-loop power control with the actual uplink transmission power required by the base station for closed-loop control and obtaining a difference, comparing the difference with a threshold; if the difference is larger than the threshold, the terminal performing uplink transmission with the power which is equal to the sum of the calculated uplink transmission power reference value for open-loop power control and the threshold, if the difference is not larger than the threshold, the terminal continuing to execute the closed-loop power control command and performing uplink power transmission with the actual transmission power required by the base station for closed-loop power control.

The power control method of the present invention comprises an open-loop power control procedure while a terminal is getting accessed randomly and a closed-loop power control procedure with participation of open-loop power control while communications are being maintained. In the open-loop power control, DwPTS signals with good relevant characteristics in the low chip rate TDD standard of 3GPP are used as measure objects, avoiding large errors brought about by measuring P-CCPCH. In the closed-loop power control, the open-loop power control is involved, namely utilizing the open-loop procedure to calculate an uplink transmission power according to DwPTS signal strength while the communications are maintained, and this calculated result obtained by using open-loop power control is taken as reference for the closed-loop power control. As this method can avoid "cocktail party effect" in closed-loop power control, outer-loop power control may not be used anymore in closed-loop power control, which helps reduce the equipment complexity.

Based on the low chip rate TDD standard of 3GPP, the present invention adopts the following technical scheme: when a terminal is getting a random access, the terminal determines the UpPTS transmission power for open-loop control according to the received DwPTS signal power from a base station so as to guarantee that the base station can correctly receive the signal, and then enters the closed-loop power control. When getting a random access, the terminal can obtain the setting of the base station by receiving the information of Base station Control Channel (BCCH) so that the open-loop control can achieve very high accuracy. During the communications, the terminal keeps measuring the DwPTS signal powers of the base station and calculates an average of the measured powers to determine an UpPTS transmission power reference value for open-loop power control. The terminal then compares this reference value with the actual transmission power required by the base station for closed-loop power control, the difference thereof will in turn be compared with a threshold so as to determine the uplink transmission power for closed-loop power control. As for services of different quality requirements, the base station will notify the terminal of the required strength of the receiving power whenever necessary, with which the terminal will determine UpPTS transmission power of the terminal for open-loop power control so as to guarantee the accuracy of closed-loop power control. Radio Network Controller (RNC) does not anticipate in the power control procedure and just provides settings for the base station.

Before randomly accessing, the terminal firstly searches for DwPTS from adjacent base stations and sorts the base stations based on the strength of the receiving powers. While searching for DwPTS sent by adjacent base stations, the terminal calculates the average of multiple measurements of the receive power of the DwPTS of each base station and sorts the average values from big to small. While getting accessed, the terminal receives BCCH information of each base station in the order of the said sorting to determine the most suitable base station to access. By receiving the BCCH information of a base station, the terminal obtains the setting of the base station as well as the transmitting power level and the required receiving power level.

When getting randomly accessed, the terminal will calculate P4, the transmitting power of UpPTS for getting accessed according to P1, the transmitting power broadcasted by the base station, P2, the power that the base station expects to receive while the terminal is getting accessed, and P3, the DwPTS power of the base station measured by the terminal with the formula P4 = P1 + P2 - P3. Besides, a large increment of power should be added to the desired transmitting power for the terminal to get accessed when it is calculated by the terminal. With the desired transmitting power level obtained through the calculation, the terminal sends an access request to the base station at the UpPTS.

During communications, the terminal will calculates P5, the uplink transmission power reference value of the terminal according to P1, the base station's transmission power broadcasted by the base station, P2, the power that the base station expects to receive, and P3, the DwPTS power of the base station measured by the terminal with the formula P5 = P1 - P3 + P2.

When the terminal and the base station are in communication, the base station transmits the required receiving power (P2) level value to the terminal according to the service quality requirement, and then enters the closed-loop power control. When the terminal and the base station are in communication, the terminal calculates the uplink transmission power reference value (level) under open-loop power control according to the measurement of the DwPTS power (P3), which can be the average of multiple power measurements of the DwPTS. According to the closed-loop power control command, when the transmitting power level required for the terminal (that is the actual transmitting power required by the base station) is larger than the uplink transmission power reference value, namely when the difference between the two levels is larger than the threshold (closed-loop control threshold), the terminal will use the sum of this threshold and the actual transmission power required by the base station as the uplink transmission power. If the service is changed and the base station proposes a new required receiving power level for the terminal, the terminal will calculate the transmission power reference value for open-loop power control and new closed-loop control threshold according to this new level. RNC will only set the maximum transmission power of each time slot of a base station and the quality requirement of each service provided by the base station.

The present invention has essential features and represents a notable progress. The present invention makes full use of the merits of simplicity and accuracy of open-loop power control by taking the advantage of TDD duplex mode having the same transmission conditions for uplink and downlink. With the method of this invention, the characteristic of the frame structure defined in the TD-SCDMA standard is employed to use the power level of DwPTS that is received and measured by the terminal from the base station and is relatively accurate as the basis of open-loop power control. As the relatively accurate measurement of DwPTS power level is used for power control instead of the power measurement of the working channel which has a larger error, accuracy of the power measurement is improved, so is the accuracy of power control. By means of the present invention, the complicated outer-loop power control method is not needed so that the RNC structure is simpler and the system is more stable.

### Brief Description of the Drawings

Figure 1 is a flowchart illustrating the open-loop power control procedure while a terminal is getting accessed randomly.
Figure 2 is a flowchart illustrating the closed-loop power control procedure with the open-loop procedure participated during communications after the terminal is accessed.
Figure 3 illustrates the structure of a TD-SCDMA frame.

### Detailed Description of the Invention

In the present invention, open-loop power control is adopted when a terminal is being accessed. Since a marked advantage of a TDD system is that uplink and downlink transmissions adopt the same carrier frequency, the uplink and downlink transmission characteristics of electric waves are almost the same in the same time period, which enables the open-loop power control of a TDD system to achieve a very high accuracy.

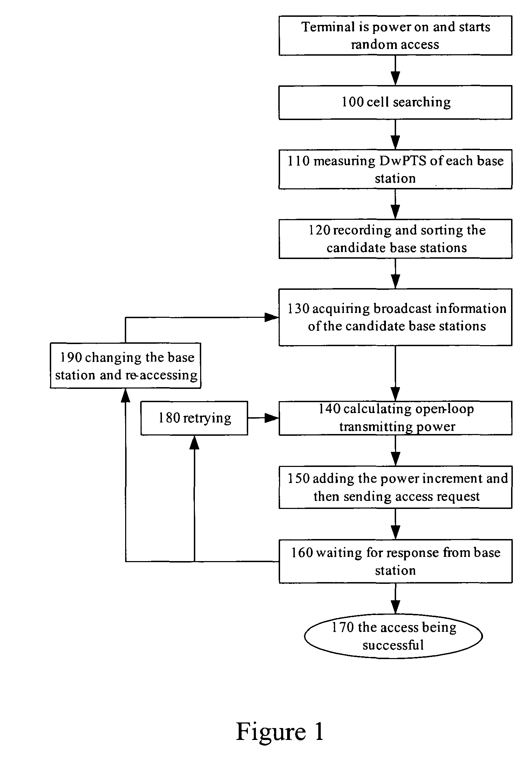

As shown in figure 1, when a terminal is power on and starts a random access procedure, the terminal will first search for DwPTS signals of adjacent base stations which may work with the same or different carrier frequencies (cell search 100), and measure the power (Pr) levels of the received DwPTS signals from these adjacent base stations, which can be done for a plurality of times to get an average of the results so as to make the measurement more accurate and moreover, to overcome the error caused by fast fading (measuring DwPTS of each base station 110). Since all the base stations in a TD-SCDMA system work synchronously, transmitting DwPTS signals at the same time and employing codes of good correlation, it is very easy for the terminal to differentiate DwPTS signals of these base stations and sort them according to signal stength. After several base stations with the most strong DwPTS signals have been measured and recorded, they become the candidate base stations to be accessed (recoding and sorting candidate base stations 120).

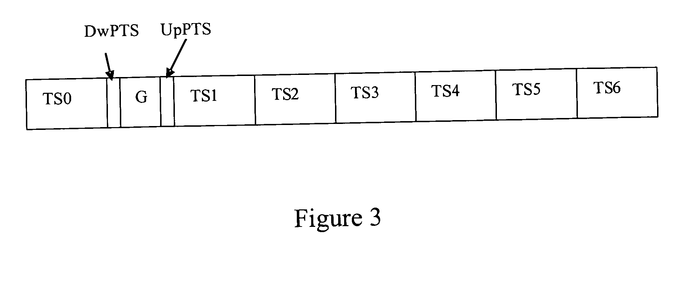

Then, broadcast channels of each candidate base station are received in proper order to obtain the message of the base station that is the most suitable to access (e.g. with the most intense signal of DwPTS according to the sorting) (acquiring broadcast information of the accessed base station 130). The transmitting power (Ptt) level of Uplink Piloting Time Slot (UpPTS, as shown in Figure 3) for open-loop power control is then calculated for the base station most suitable to access (calculating open-loop transmission power 140). Ptt = Ptb- Prt + Preq + Pad, where Ptb is the transmission power (level) of the DwPTS signal of this base station; Prt is the DwPTS signal power (level) actually received and measured by the terminal; Preq is the receiving power (level) required by the base station; and Pad is an increment of transmitting power (level) of the terminal in order to prevent burst interference.

Through the above process (130), Preq, the receiving power (level) required by this base station and Ptb, the transmission power (level) of DwPTS signal of this base station are known (the accurate value of which can be acquired from the broadcast information of the base station). Prt can be obtained by actual measurement. Therefore, accuracy of the open-loop power control can be very high. Pad can be a relatively large numerical value, such as 10dB.

With the calculated result: Ptb- Prt + Preq plus a power increment Pad, a random access request is sent to the base station (adding the power increment and then sending an access request 150). When getting randomly accessed, the terminal is often in a fast fading environment, thus by adding a power increment Pad the access reliability can be improved. Furthermore, as only the access request is transmitted by the terminal in the UpPTS without any service data, as defined in the TD-SCDMA standard and shown in Figure 3, no interference is possible for other clients. Even if the UpPTS is transmitted by the terminal's largest transmission power, there will not be any interference problem.

The terminal waits for the base station's response after transmitting a random access request thereto (160). If the terminal receives a response, which shows that the access is successful, the terminal enters the closed-loop power control procedure (170). In contrast, if the terminal receives no response, which shows that the access is unsuccessful, there are two ways to follow: one way is to retry after a certain period of delay, namely try again on the current candidate base station (180), return to execute Step 140 and meanwhile record the retrying times, stop retrying when the retrying times reach a predefined number; the other way is to try to access other candidate base stations (selecting the base station with the next most intense signal of DwPTS according to the above said sorting to access 190), namely return to execute Step 130.

As mentioned in the Background of the Invention, a terminal in a CDMA system usually adopts closed-loop power control during on-going communications. However, the "cocktail party effect" of closed-loop power control makes it necessary for outer-loop power control to be participated so as to avoid the terminal's transmission power from continuously increasing under the circumstances of interference. The present invention solves this problem by involving open-loop power control in the closed-loop power control procedure.

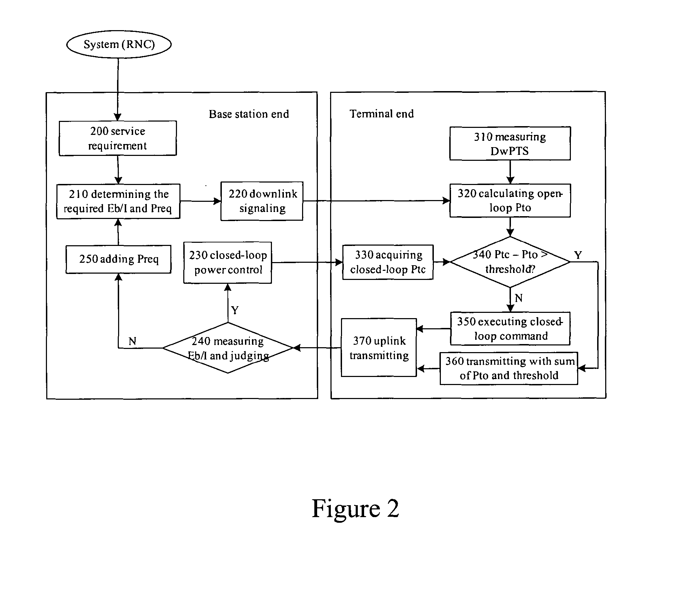

As shown in Figure 2, during the communications, the base station determines the required Eb/I and required receiving power (level) Preq (210) according to Quality of Service (QoS) requirement (200), and notifies the terminal of the required receiving power (level) Preq through higher layer downlink signaling. Meanwhile, the base station measures the Eb/I of the uplink signal (240) according to the received uplink signal from the terminal, compares the measured Eb/I with the required Eb/I, and sends a closed-loop power control command (230) or adjusts Preq (250). While executing the closed-loop power control command, the terminal keeps measuring the DwPTS signal of the base station (310) and gets the time average of the received levels of the signal, which is used for calculating Pto, the power level that should be transmitted by the terminal under open-loop power control (320). Pto = Ptb - Prt + Preq, where Ptb and Preq are accurately known and Prt, the receiving power (level) measured at DwPTS is also relatively accurate. Therefore, the calculated Pto is relatively accurate as well. The calculated Pto is used as a reference and is compared (340) with Ptc (330) that is the actual uplink transmission power required by the base station in the closed-loop power control command (namely the power expected to be transmitted by the terminal). If the difference between the actual uplink transmission power Ptc for closed-loop power control and the calculated Pto is higher than a closed-loop control threshold (this threshold is determined by specific engineering design, e.g. 3-6dB), the terminal will perform uplink transmission with the power equal to the sum of the expected transmitting power (Pto) for open-loop control and the threshold. If the difference thereof is not higher than the threshold, the terminal will continue to execute the closed-loop power control command and perform uplink transmission with the actual transmission power required by the base station in closed-loop power control. This threshold is used as a control to the uplink transmission power (level) so as to avoid "cocktail party effect" (360, 370); if the difference is not higher than this threshold, the terminal continues to execute the closed-loop power control command (350), namely perform uplink transmission with the actual uplink transmission power (level) Ptc required by the base station in closed-loop control (370).

With a pre-determined Preq, the required power level for receiving, the base station measures Eb/I and judges whether Eb/I has been always below the requirement of communication quality during a certain period of time (duration of the specific period is determined by engineering design), if the quality is always below the requirement of service (the required power level for receiving, Preq and the required code error rate, Eb/I) during the period , the required Eb/I and required signal power (level) for receiving Preq are to be adjusted (250). The modified Preq will then be transmitted to the terminal through higher layer downlink signaling (210, 220) while the terminal carries out other steps in the same way as mentioned above. If the communication quality is not below the quality required by the service for a certain period of time, closed-loop power control is maintained (230).

In the present invention, no outer-loop power control is employed at all while communications are maintained between the base station and the terminal. The Radio Network Controller (RNC) of the system is not involved in the power control process. What is needed for RNC is only to configure the base station, to set parameters in the base station, such as maximum transmission power and quality requirement by various services, according to the network design, rather than carrying out complex power control.

## Claims

1. A power control method based on Downlink Piloting Time Slot, DwPTS, comprising an open-loop power control procedure while a terminal is getting accessed randomly and a closed-loop power control procedure while communications are being maintained after the terminal is accessed, wherein
the said open-loop power control procedure while a terminal is getting accessed randomly further comprises:
A. the terminal measuring (110) the received DwPTS signal powers transmitted by adjacent base stations during cell searching (100), sorting the base stations in the order of signal intensity of DwPTS (120), and determining candidate base stations;
B. the terminal calculating the Uplink Piloting Time Slot, UpPTS, transmission power for open-loop power control (140) while the terminal is getting accessed according to the base station transmission power broadcast by the most suitable candidate base station (130), the expected receiving power and the DwPTS signal power of the base station actually measured by the terminal, and sending an access request to the most suitable candidate base station with this transmission power (150);
and the said closed-loop power control procedure after the terminal is accessed further comprises:
C. the base station determining the required receiving power (210), determining actual uplink transmission power required by the base station for closed-loop power control (230), sending the required receiving power to the terminal (220), and sending the actual uplink transmission power required by the base station to the terminal with a closed-loop power control command (230);
D. the terminal keeping measuring the actually received DwPTS signal power of the base station (310), then calculating an uplink transmission power reference value for open-loop power control according to the base station transmission power and the required receiving power (320); and
E. comparing the calculated uplink transmission power reference value under open-loop power control with the actual uplink transmission power (330) required by the base station under closed-loop control and obtaining a difference, comparing the difference with a threshold (340); if the difference is larger than the threshold, the terminal performing uplink transmission with the power which is equal to the sum of the calculated uplink transmission power reference value for open-loop power control and the threshold (360, 370), if the difference is not larger than the threshold, the terminal continuing to execute the closed-loop power control command (350) and performing uplink power transmission with the actual transmission power required by the base station for closed-loop power control (370).

2. A method according to claim 1, wherein, in the said step A, the said DwPTS signal powers transmitted by adjacent base stations are the average values of multiple measurements of DwPTS signal powers.

3. A method according to claim 1, wherein, in the said step B, the transmission power of UpPTS for open-loop power control while the terminal is getting accessed = the transmission power of DwPTS signal broadcasted by the base station + the receiving power expected by the base station - the received DwPTS signal power actually measured by the terminal + an increment of transmission power of the terminal to avoid burst interference.

4. A method according to claim 3, wherein the said increment of transmission power of the terminal to avoid burst interference is 10dB.

5. A method according to claim 1, further comprising: the terminal executing the said step B from the candidate base station with the largest DwPTS signal strength according to the sorting and waiting for a response from the base station (160) after sending an access request (150); if the base station returns a response, determining that the access is successful (170), otherwise repeatedly executing step B for the current candidate base station (180) or repeatedly executing step B for the candidate base station with the second largest DwPTS signal strength (190).

6. A method according to claim 1, wherein, in the said step C, the base station sends the required receiving power to the terminal through higher layer downlink signalling (220).

7. A method according to claim 1, wherein, in the said step C, the step of the base station determining the required receiving power further comprises: the base station measuring Eb/I of the uplink signals from the terminal which are received when the terminal is getting accessed, and adjusting the required receiving power (250) if the Eb/I is always below the communication quality requirement for a certain period of time (240).

8. A method according to claim 1, wherein, in the said step C, the step of the base station sending the actual uplink transmission power required by the base station to the terminal with a closed-loop power control command is executed (230) when it is judged that the measured Eb/I of uplink signals is always not below a value sustaining the communication quality requirement for a certain period of time (240).

9. A method according to claim 7 or claim 8, wherein the duration of the said certain period of time is determined by specific engineering design.

10. A method according to claim 7 or claim 8, wherein the said communication quality requirement is the Eb/I determined according to service of quality requirement.

11. A method according to claim 1, wherein, in the said step D, the said uplink transmission power reference value for open-loop power control = DwPTS signal transmission power broadcasted by the base station - the received DwPTS signal power of the base station actually measured by the terminal + the receiving power expected by the base station.

12. A method according to claim 1 or claim 11, wherein, in the said step D, the said received DwPTS signal power of the base station actually measured by the terminal is an averaged value for a certain period of time.

13. A method according to claim 1, wherein the said threshold in the said step D is chosen between 3-6dB according to specific engineering design.

14. A method according to claim 1, wherein a Radio Network Controller, RNC, does not participate in power control, only setting the maximum transmission power for each time-slot of the base station and setting quality requirements when the base station carries out various services, the maximum transmission power and the quality requirements being used when the base station determines the required receiving power and required Eb/I.

## Patentansprüche

1. Leistungsregelungsverfahren auf der Basis eines Downlink-Pilot-Zeitschlitzes, DwPTS, das eine Leistungssteuerungsprozedur ohne Rückführung umfasst, während auf ein Endgerät direkt zugegriffen wird, und eine Leistungsregelungsprozedur mit Rückführung, während Kommunikationen aufrechterhalten werden, nachdem auf das Endgerät zugegriffen wurde, worin
die Leistungssteuerungsprozedur ohne Rückführung, während auf ein Endgerät direkt zugegriffen wird, außerdem umfasst:
A. das Endgerät (110) misst die empfangenen DwPTS-Leistungen, die während der Zellensuche (100) durch benachbarte Basisstationen übertragen werden, sortiert die Basisstationen in die Anordnung der Signalintensität des DwPTS (120) und bestimmt Basisstationskandidaten;
B. das Endgerät berechnet die UpPTS(Uplink-Pilot-Zeitschlitz)-Übertragungsleistung für Leistungssteuerung ohne Rückführung (140), während auf das Endgerät zugegriffen wird, gemäß der Basisstations-Übertragungsleistung, die durch den geeignetsten Basisstationskandidaten (130) ausgestrahlt wird, gemäß der erwarteten Empfangsleistung und der DwPTS-Signalleistung der Basisstation, die vom Endgerät eigentlich gemessen wird, und sendet eine Zugriffsanforderung an den geeignetsten Basisstationskandidaten mit dieser Übertragungsleistung (150);
und die Leistungsregelungsprozedur mit Rückführung, nachdem auf das Endgerät zugegriffen wurde, umfasst außerdem:
C. die Basisstation bestimmt die benötigte Empfangsleistung (210), bestimmt die eigentliche Uplink-Übertragungsleistung, die von der Basisstation für Leistungsregelung mit Rückführung (230) benötigt wird, sendet die benötigte Empfangsleistung an das Endgerät (220) und sendet die von der Basisstation benötigte eigentliche Uplink-Übertragungsleistung an das Endgerät mit einem Befehl (230) der Leistungsregelung mit Rückführung;
D. das Endgerät misst weiterhin die eigentlich empfangene DwPTS-Signalleistung der Basisstation (310), berechnet dann einen Referenzwert der Uplink-Übertragungsleistung für Leistungssteuerung ohne Rückführung gemäß der Basisstations-Übertragungsleistung und der erforderlichen Empfangsleistung (320); und
E. Vergleichen des berechneten Referenzwerts der Uplink-Übertragungsleistung bei Leistungssteuerung ohne Rückführung mit der eigentlichen Uplink-Übertragungsleistung (330), die von der Basisstation bei Regelung mit Rückführung benötigt wird, und Ermitteln einer Differenz, indem die Differenz mit einer Schwelle (340) verglichen wird; falls die Differenz größer ist als die Schwelle, führt das Endgerät Uplink-Übertragung mit der Leistung aus, die gleich der Summe des berechneten Referenzwerts der Uplink-Übertragungsleistung für Leistungssteuerung ohne Rückführung und der Schwelle (360, 370) ist; falls die Differenz nicht größer ist als die Schwelle, fährt das Endgerät damit fort, den Befehl (350) der Leistungsregelung mit Rückführung auszuführen und Uplink-Leistungsübertragung mit der eigentlichen Übertragungsleistung auszuführen, die von der Basisstation für Leistungsregelung mit Rückführung (370) benötigt wird.

2. Verfahren nach Anspruch 1, worin im Schritt A die von benachbarten Basisstationen übertragenen DwPTS-Signalleistungen die mittleren Werte von mehrfachen Messungen der DwPTS-Signalleistungen sind.

3. Verfahren nach Anspruch 1, worin im Schritt B, während auf das Endgerät zugegriffen wird, die Übertragungsleistung des UpPTS für Leistungssteuerung ohne Rückführung
= die Übertragungsleistung des von der Basisstation ausgestrahlten DwPTS-Signals
+ die von der Basisstation erwartete Empfangsleistung
- die eigentlich vom Endgerät gemessene empfangene DwPTS-Signalleistung
+ ein Inkrement der Übertragungsleistung des Endgeräts, um Burst-Störung zu verhindern.

4. Verfahren nach Anspruch 3, worin das Inkrement der Übertragungsleistung des Endgeräts 10 dB ist, um Burst-Störung zu vermeiden.

5. Verfahren nach Anspruch 1, außerdem umfassend: das Endgerät führt den Schritt B vom Basisstationskandidaten mit der größten DwPTS-Signalstärke aus gemäß dem Sortieren und Warten auf eine Antwort von der Basisstation (160), nachdem eine Zugriffsanforderung (150) gesendet wurde; falls die Basisstation eine Antwort zurücksendet, das Bestimmen, dass der Zugriff erfolgreich (170) ist, ansonsten wiederholtes Ausführen von Schritt B für den eigentlichen Basisstationskandidaten (180) oder wiederholtes Ausführen von Schritt B für den Basisstationskandidaten mit der zweitgrößten DwPTS-Signalstärke (190).

6. Verfahren nach Anspruch 1, worin im Schritt C die Basisstation die erforderliche Empfangsleistung an das Endgerät durch Downlink-Signalisierung höherer Schicht (220) sendet.

7. Verfahren nach Anspruch 1, worin im Schritt C der Schritt des Bestimmens der erforderlichen Empfangsleistung durch die Basisstation außerdem umfasst: die Basisstation misst das Verhältnis Eb/I (Bit-Energie/Störung) der Uplink-Signale vom Endgerät, die empfangen werden, wenn auf das Endgerät zugegriffen wird, und passt die erforderliche Empfangsleistung (250) an, falls Eb/I immer unter der Kommunikationsqualitäts-Anforderung für eine gewisse Zeitperiode (240) liegt.

8. Verfahren nach Anspruch 1, worin im Schritt C der Schritt des Sendens der von der Basisstation benötigten eigentlichen Uplink-Übertragungsleistung durch die Basisstation an das Endgerät mit einem Leistungsregelungsbefehl mit Rückführung ausgeführt wird (230), wenn geurteilt wird, dass das gemessene Eb/I von Uplink-Signalen nie unter einem Wert liegt, der die Kommunikationsqualitätsanforderung für eine gewisse Zeitperiode (240) aufrechterhält.

9. Verfahren nach Anspruch 7 oder Anspruch 8, worin die Dauer der gewissen Zeitperiode durch spezifisches Technikdesign bestimmt wird.

10. Verfahren nach Anspruch 7 oder Anspruch 8, worin die Kommunikationsqualitätsanforderung das gemäß der Qualitätsdienstanforderung bestimmte Eb/I ist.

11. Verfahren nach Anspruch 1, worin im Schritt D der Referenzwert der Uplink-Übertragungsleistung für Leistungssteuerung ohne Rückführung
= DwPTS-Signalübertragungsleistung, die von der Basisstation ausgestrahlt wird
- die vom Endgerät eigentlich gemessene empfangene DwPTS Signalleistung der Basisstation
+ die von der Basisstation erwartete Empfangsleistung.

12. Verfahren nach Anspruch 1 oder Anspruch 11, worin im Schritt D die eigentlich durch das Endgerät gemessene empfangene DwPTS-Signalleistung der Basisstation ein gemittelter Wert für eine gewisse Zeitperiode ist.

13. Verfahren nach Anspruch 1, worin die Schwelle im Schritt D gemäß dem spezifischen Technikdesign zwischen 3 und 6 dB gewählt wird.

14. Verfahren nach Anspruch 1, worin sich eine Funknetzsteuerung, RNC, an der Leistungsregelung nicht beteiligt, nur die maximale Übertragungsleistung für jeden Zeitschlitz der Basisstation festsetzt und Qualitätsanforderungen festsetzt, wenn die Basisstation verschiedene Dienste ausführt, wobei die maximale Übertragungsleistung und die Qualitätsanforderungen verwendet werden, wenn die Basisstation die erforderliche Empfangsleistung und das erforderliche Eb/I bestimmt.

## Revendications

1. Procédé de commande de puissance fondé sur une tranche de temps de pilotage de liaison descendante, DwPTS, comprenant une procédure de commande de puissance en boucle ouverte au cours de l'accès aléatoire à un terminal et une procédure de commande de puissance en boucle fermée tandis que des communications sont maintenues suite à l'accès au terminal, dans lequel :
ladite procédure de commande de puissance en boucle ouverte au cours de l'accès aléatoire à un terminal comprend en outre les étapes ci-dessous dans lesquelles :
A. le terminal mesure (110) les puissances de signal de tranche de temps DwPTS reçues transmises par des stations de base adjacentes au cours d'une recherche de cellule (100), trie les stations de base selon l'ordre de l'intensité de signal de tranche de temps DwPTS (120), et détermine des stations de base candidates ;
B. le terminal calcule la puissance de transmission de tranche de temps de pilotage de liaison montante, UpPTS, pour une commande de puissance en boucle ouverte (140) lors d'un accès au terminal, selon la puissance de transmission de station de base diffusée par la station de base candidate la plus appropriée (130), la puissance de réception attendue, et la puissance de signal de tranche de temps DwPTS de la station de base réellement mesurée par le terminal, et envoie une demande d'accès à la station de base candidate la plus appropriée, avec cette puissance de transmission (150) ; et
ladite procédure de commande de puissance en boucle fermée suite à l'accès audit terminal comprend en outre les étapes ci-dessous dans lesquelles :
C. la station de base détermine la puissance de réception requise (210), détermine la puissance de transmission en liaison montante effective requise par la station de base pour une commande de puissance en boucle fermée (230), envoie la puissance de réception requise au terminal (220), et envoie la puissance de transmission en liaison montante effective requise par la station de base, au terminal, avec une instruction de commande de puissance en boucle fermée (230) ;
D. le terminal continue de mesurer la puissance de signal de tranche de temps DwPTS réellement reçue de la station de base (310), et calcule ensuite une valeur de référence de puissance de transmission en liaison montante pour une commande de puissance en boucle ouverte selon la puissance de transmission de station de base et la puissance de réception requise (320) ; et
E. il compare la valeur de référence de puissance de transmission en liaison montante, calculée dans le cadre de la commande de puissance en boucle ouverte, à la puissance de transmission en liaison montante effective (330) requise par la station de base dans le cadre d'une commande en boucle fermée, il obtient une différence, il compare la différence à un seuil (340) ; si la différence est supérieure au seuil, le terminal met en oeuvre une transmission en liaison montante avec la puissance qui est égale à la somme de la valeur de référence de puissance de transmission en liaison montante, calculée pour la commande de puissance en boucle ouverte, et du seuil (360, 370), et si la différence n'est pas supérieure au seuil, le terminal continue d'exécuter l'instruction de commande de puissance en boucle fermée (350) et met en oeuvre une transmission de puissance en liaison montante avec la puissance de transmission effective requise par la station de base pour la commande de puissance en boucle fermée (370).

2. Procédé selon la revendication 1, dans lequel, dans ladite étape A, lesdites puissances de signal de tranche de temps DwPTS transmises par des stations de base adjacentes correspondent aux valeurs moyennes de multiples mesures de puissances de signal de tranche de temps DwPTS.

3. Procédé selon la revendication 1, dans lequel, dans ladite étape B, la puissance de transmission de tranche de temps UpPTS pour la commande de puissance en boucle ouverte lors d'un accès au terminal = la puissance de transmission du signal de tranche de temps DwPTS diffusé par la station de base + la puissance de réception attendue par la station de base - la puissance de signal de tranche de temps DwPTS reçue réellement mesurée par le terminal + un incrément de puissance de transmission du terminal en vue d'éviter un brouillage en rafales.

4. Procédé selon la revendication 3, dans lequel ledit incrément de puissance de transmission du terminal en vue d'éviter un brouillage en rafales est de 10 dB.

5. Procédé selon la revendication 1, comprenant en outre les étapes ci-après dans lesquelles : le terminal exécute ladite étape B en commençant par la station de base candidate présentant l'intensité de signal de tranche de temps DwPTS la plus élevée selon le tri, et il attend une réponse en provenance de la station de base (160) suite à l'envoi d'une demande d'accès (150) ; si la station de base renvoie une réponse, il détermine que l'accès a réussi (170), sinon, il exécute l'étape B de façon répétée pour la station de base candidate en cours (180) ou il exécute l'étape B de façon répétée pour la station de base candidate présentant la seconde intensité de signal de tranche de temps DwPTS la plus élevée (190).

6. Procédé selon la revendication 1, dans lequel, dans ladite étape C, la station de base envoie la puissance de réception requise au terminal à travers une signalisation en liaison descendante de couche supérieure (220).

7. Procédé selon la revendication 1, dans lequel, dans ladite étape C, l'étape dans laquelle la station de base détermine la puissance de réception requise comprend en outre les étapes ci-après dans lesquelles : la station de base mesure le rapport Eb/I des signaux de liaison montante en provenance du terminal, lesquels sont reçus lors d'un accès au terminal, et elle ajuste la puissance de réception requise (250) si le rapport Eb/I est toujours inférieur à l'exigence de qualité de communication pour une période de temps donnée (240).

8. Procédé selon la revendication 1, dans lequel, dans ladite étape C, l'étape dans laquelle la station de base envoie la puissance de transmission en liaison montante effective requise par la station de base, au terminal, avec une instruction de commande de puissance en boucle fermée, est exécutée (230) lorsqu'il est déterminé que le rapport Eb/I mesuré de signaux de liaison montante est toujours non inférieur à une valeur maintenant l'exigence de qualité de communication pour une période de temps donnée (240).

9. Procédé selon la revendication 7 ou 8, dans lequel la durée de ladite période de temps donnée est déterminée par une conception d'ingénierie spécifique.

10. Procédé selon la revendication 7 ou 8, dans lequel ladite exigence de qualité de communication correspond au rapport Eb/I déterminé selon l'exigence de qualité de service.

11. Procédé selon la revendication 1, dans lequel, dans ladite étape D, ladite valeur de référence de puissance de transmission en liaison montante pour la commande de puissance en boucle ouverte = la puissance de transmission de signal de tranche de temps DwPTS diffusée par la station de base - la puissance de signal de tranche de temps DwPTS reçue de la station de base réellement mesurée par le terminal + la puissance de réception attendue par la station de base.

12. Procédé selon la revendication 1 ou 11, dans lequel, dans ladite étape D, ladite puissance de signal de tranche de temps DwPTS reçue de la station de base, réellement mesurée par le terminal, est une valeur ramenée à une moyenne pour une période de temps donnée.

13. Procédé selon la revendication 1, dans lequel ledit seuil dans ladite étape D est choisi entre 3 et 6 dB selon une conception d'ingénierie spécifique.

14. Procédé selon la revendication 1, dans lequel un contrôleur de réseau radio, RNC, ne prend pas part à la commande de puissance, il définit uniquement la puissance de transmission maximale pour chaque tranche de temps de la station de base, et il définit des exigences de qualité lorsque la station de base met en oeuvre différents services, la puissance de transmission maximale et les exigences de qualité étant utilisées lorsque la station de base détermine la puissance de réception requise et le rapport Eb/I requis.
